# EUROPÄISCHE PATENTSCHRIFT

(11) **EP 3 381 027 B1**
(45) Veröffentlichungstag und Bekanntmachung des Hinweises auf die Patenterteilung: **21.07.2021**
(21) Anmeldenummer: 17700592.3
(22) Anmeldetag: 10.01.2017
(51) Int. Cl.: G09B 9/05, B66C 13/40, B66C 13/54, B66C 13/46, E02F 9/16, E02F 9/20, E02F 9/26

(54) **KRAN-, BAUMASCHINEN- ODER FLURFÖRDERZEUG-SIMULATOR**
CRANE, CONSTRUCTION MACHINE OR INDUSTRIAL TRUCK SIMULATOR
SIMULATEUR DE GRUES, DE MACHINES DE CHANTIER OU DE CHARIOTS DE MANUTENTION

(30) Priorität: 14.01.2016 DE 102016000353
(43) Veröffentlichungstag der Anmeldung: 03.10.2018
(73) Patentinhaber: Liebherr-Components Biberach GmbH, 88400 Biberach an der Riß (DE)
(72) Erfinder: PALBERG, Michael, 88499 Riedlingen (DE); RESCH, Jürgen, 88456 Degernau (DE); BRANDT, Sven, 88427 Bad Schussenried (DE); STEIB, Thomas, 88444 Ummendorf (DE)
(74) Vertreter: Thoma, Michael
(86) Internationale Anmeldenummer: PCT/EP2017/000024
(87) Internationale Veröffentlichungsnummer: WO 2017/121636

(56) Entgegenhaltungen:
- EP-A1- 2 280 359
- CN-A- 103 794 103
- DE-A1-102010 016 113
- DE-A1-102013 011 818
- US-A1- 2003 224 333

## Beschreibung

Die vorliegende Erfindung betrifft einen Simulator für einen Kran, eine Baumaschine oder ein Flurförderzeug, mit einem Steuerstand, der zumindest ein Eingabemittel zum Eingeben von Steuerbefehlen aufweist, einem grafischen Simulationsmodul zum Berechnen einer virtuellen Darstellung der Maschinenumgebung und/oder von aus dem Steuerstand sichtbaren Maschinenkomponenten wie Ausleger oder Lasthaken, sowie einer Anzeigevorrichtung zum Anzeigen der berechneten virtuellen Darstellung, wobei ein Bewegungssimulationsmodul zum Bestimmen von Bewegungen und/oder Verformungen der Maschinenkomponenten in Abhängigkeit der eingegebenen Steuerbefehle vorgesehen ist, in Abhängigkeit derer das grafische Simulationsmodul die virtuelle Darstellung berechnet.

Krane und ähnliche Großgeräte wie Bohrrammgeräte, Surface Miner oder Seilbagger sind in der Bedienung und Steuerung sehr komplex und daher schwierig zu erlernen, so dass übliche Schulungs- und Lehrmaterialien wie Fotos, Pläne oder auch Filme nicht ausreichen, um die Bedienung und Überwachung tatsächlich anschaulich zu vermitteln und leicht erlernbar zu machen. Dabei ist nicht nur die Vielzahl der Steuerungsfunktionen und deren Zusammenwirken sowie die damit einhergehenden, in ihrer Gesamtheit recht komplexen Eingabemittel wie Joysticks, Fußpedale und Steuerungsschalter ein Problem, sondern auch die oft ungewohnten, maschinenspezifischen Reaktionen der Maschinenstruktur auf Bewegungen der Stellantriebe. Krane wie beispielsweise Turmdrehkrane oder Teleskop-Wippkrane, aber auch Hafen- oder Maritimkrane besitzen lange, schlanke Strukturbauteile wie Ausleger- oder Turmstrukturen, die sich verwinden und relativ weich sind, so dass mit Beschleunigungs- oder Abbremsvorgängen der Stellantriebe Strukturverformungen und Pendelbewegungen einhergehen, die eine sichere Bedienung auch für erfahrene Kranführer erschweren, wenn diese auf einen neuen Krantyp umsteigen. Anders als bei Kleingeräten mit näherungsweise als starr anzunehmenden Strukturen kann es beispielsweise bei Turmdrehkranen zu Verformungen der Turmstruktur und des Auslegersystems kommen, wenn eine Last aufgenommen wird, oder es kann die Last beim Drehen um die aufrechte Achse nachpendeln und der Ausleger dementsprechend rotatorisch nachschwingen. Ähnliches kann bei Seilbaggern oder Bohrrammgeräten auftreten, so dass ein Kranführer bzw. Maschinenführer unsicher wird, wenn er die in der Theorie zwar sicher erlernten Steuervorgänge in der Praxis anwendet und die entsprechenden Kranreaktionen erfährt.

Um die Schulung und das Training realitätsnäher zu gestalten, wurde daher bereits der Einsatz von Kransimulatoren vorgeschlagen, in denen der zu trainierende Kranführer in einem näherungsweise realistischen Steuerstand, der beispielsweise der Kranführerkabine eines jeweiligen Krantyps entsprechen kann, über dort vorgesehene Eingabemittel wie Joysticks, Pedale, Steuerschalter oder Touchscreens Steuerbefehle eingeben kann, um die Kranreaktionen auf diese Steuerbefehle möglichst realitätsnah zu erfahren, vgl. US 2003/0224333 A1. Hierzu wird auf einer Anzeigevorrichtung, die bekanntermaßen mehrere Bildschirme umfassen kann, die im Sichtfeld des Steuerstands angeordnet sind, eine virtuelle Darstellung der Kranumgebung sowie der vom Steuerstand aus sichtbaren Krankomponenten wie beispielsweise Ausleger und Lasthaken dargestellt, wobei die virtuelle Darstellung der Kranumgebung und der Krankomponenten von einem grafischen Simulationsmodul in Abhängigkeit der eingegebenen Steuerbefehle errechnet wird.

Wird beispielsweise der Kran um die aufrechte Achse verdreht bzw. ein entsprechender Steuerbefehl eingegeben, berechnet das grafische Simulationsmodul die Darstellung der Kranumgebung derart, dass diese auf dem Bildschirm von rechts nach links bzw. umgekehrt wandert, so dass die auf der Anzeigevorrichtung dargestellte virtuelle Kranumgebung am Kranführer in ähnlicher Weise vorbeiwandert, wie dies bei einem "echten" Verdrehen eines Krans in dessen Krankabine erfolgt. Wird andererseits ein Steuerbefehl eingegeben, der beispielsweise den Lasthaken absenkt und/oder den Ausleger abwippt, verändert das grafische Simulationsmodul die virtuelle Darstellung derart, dass der Kranhaken auf der Anzeigevorrichtung nach unten wandert bzw. der Ausleger abwippt. Durch eine solche realitätsnahe Simulation des Kranbetriebs bekommt der Kranführer leichter ein Gespür dafür, was die Reaktionen auf eine Betätigung der Eingabemittel des Steuerstands sind.

Ein solcher Kransimulator ist beispielsweise aus der Schrift DE 10 2013 011 818 A1 bekannt. Dort ist eine Kranführerkabine als Steuerstand mit entsprechenden Eingabemitteln vorgesehen, wobei die Sichtfenster bzw. die Verglasung der nachgebildeten Kranführerkabine durch Bildschirme ersetzt sind, auf denen die virtuelle Darstellung der Kranumgebung angezeigt wird. Durch ein technisches Simulationsmodul soll dabei auch das dynamische Verhalten der Steuerungs- und Antriebskomponenten simuliert und bei der Bildschirmdarstellung berücksichtigt werden, wobei hier vor allem die bei bestimmten Kranbewegungen auftretenden Stellbewegungen von Krankomponenten wie beispielsweise des Hubwerks dargestellt werden.

Bei diesem vorbekannten Kransimulator ist die Realitätsnähe der virtuellen Darstellung jedoch noch begrenzt. Zum einen kann es durch die komplexen Rechenvorgänge, die für die Bestimmung des dynamischen Verhaltens notwendig sind, zu einem verzögerten Ansprechverhalten bzw. einer gegenüber den tatsächlichen, in Echtzeit erfolgenden Kranreaktionen verzögerten Darstellung der virtuellen Kranrealität kommen, insbesondere wenn mehrere Stellbewegungen gleichzeitig virtuell umzusetzen sind. Zum anderen ist die intuitive Erspürbarkeit der Kranreaktionen auf bestimmte Steuerbefehle durch die auf den Bildschirmen erzeugbaren Darstellungen der virtuellen Kranumgebung begrenzt.

Hiervon ausgehend liegt der vorliegenden Erfindung die Aufgabe zugrunde, einen verbesserten Simulator der eingangs genannten Art zu schaffen, der Nachteile des Standes der Technik vermeidet und Letzteren in vorteilhafter Weise weiterbildet. Insbesondere soll eine realitätsnähere Simulation des Kran- bzw. Maschinenbetriebs erreicht werden, die den Trainingseffekt verbessert und das tatsächliche Kran- bzw. Maschinenverhalten besser vermittelt und leichter erlernbar macht.

Erfindungsgemäß wird die genannte Aufgabe durch einen Simulator gemäß Anspruch 1 gelöst. Bevorzugte Ausgestaltungen der Erfindung sind Gegenstand der abhängigen Ansprüche.

Es wird also eine Datenemulation unter Verwendung von Hardwarekomponenten vorgeschlagen, die tatsächliche Stellbewegungen ausführen und somit "echte" Stellbewegungen der zu simulierenden Maschine nachbilden, um entsprechende Bewegungsdaten schneller und mit weniger Rechenleistung bereitzustellen, wodurch in Echtzeit oder nahezu Echtzeit eine realistischere Simulation erreicht werden kann. Dabei kann der Simulator die für die Bewegungssimulation benötigten Bewegungsparameter nicht alle von einem Simulationsrechner berechnen lassen, sondern zumindest teilweise im Wege der Datenemulation unter Verwendung von sich tatsächlich bewegenden Hardwarekomponenten, die einen Bestandteil des Simulators bilden können, bestimmen. Ein solches Datenemulationsmodul des Simulators kann insbesondere Stellantriebskomponenten und/oder Leistungselektronikkomponenten umfassen, mittels derer tatsächlich Stellbewegungen ausgeführt werden, die die echten Kran- bzw. Maschinenbewegungen nachbilden und diese Bewegungen charakterisierende Daten bereitstellen, beispielsweise in Form von Sensorsignalen, die die Stellbewegungen der genannten Antriebskomponenten wiedergeben. Durch eine solche Datenemulation können Bewegungs- und/oder Positionsparameter, die dann für die Bewegungssimulation weiter verwendet werden können, deutlich schneller und unter geringerer Rechenleistung bereitgestellt werden, was eine realistischere Simulation in Echtzeit bzw. nahezu Echtzeit erlaubt.

Um eine besonders schnelle, realistische Bestimmung von Bewegungen der Maschinenkomponenten in Abhängigkeit der am Steuerstand eingegebenen Steuerbefehle zu erreichen, kann nach einem weiteren Aspekt das genannte Bewegungssimulationsmodul als Hybrideinrichtung bzw. Hybridmodul ausgebildet sein, das einerseits einen Rechner zur Simulation von Bewegungs- und/oder Positionsparametern und andererseits den echten Kran- bzw. Maschinenstellantrieben zumindestens ähnliche Hardwarekomponenten wie Antriebseinheiten, Drehgeber oder Frequenzumrichter umfasst, mittels derer Stellbewegungen nachgebildet und Bewegungs- und/oder Positionsparameter bestimmt werden. Insbesondere werden "echte" Hardwarekomponenten verwendet, die auch im zu simulierenden Kran bzw. der zu simulierenden Maschine als Stellantriebs- und/oder Steuervorrichtungsbauteile verbaut sind.

Insbesondere kann das Bewegungssimulationsmodul den Schaltschrank oder zumindest einen Teil des Schaltschranks und dessen Komponenten umfassen, der auch in der zu simulierenden Maschine Verwendung findet und dort einen Teil der Maschinensteuerung bildet. Insbesondere kann die Leistungselektronik und/oder zumindest ein Teil der Leistungselektronik wie beispielsweise ein Frequenzumrichter verwendet werden, um die Stellbewegungen nachzubilden, die von Steuerbefehlseingaben am Steuerstand ausgelöst werden.

Gemäß der Erfindung finden Stellantriebseinheiten, beispielsweise in Form von Servomotoren Verwendung finden, die der Emulation der Stellantriebsbewegungen der zu simulierenden Maschine bzw. Maschinenkomponenten dienen. Dabei wird für eine jeweilige Stellantriebsachse eine Antriebseinheit beispielsweise in Form einer Servoantriebseinheit verwendet, die - insbesondere über den vorgenannten Frequenzumrichter - entsprechend einem Steuerbefehl angesteuert wird, und ferner mit einer weiteren Antriebseinheit, beispielsweise in Form einer Servoantriebseinheit, gekuppelt wird, mittels derer ein Gegenmoment und/oder eine Gegenlast ausgeübt werden kann, um tatsächlich auftretende Lasten, Widerstände oder Trägheiten zu simulieren. Beispielsweise kann mittels der genannten zweiten Antriebseinheit eine Last simuliert werden, die einem Hubwerk entgegenwirkt, oder es kann ein Windmoment simuliert werden, das einem Drehwerksantrieb entgegenwirkt.

Die ggf. unter Berücksichtigung des aufgebrachten Gegenmoments oder der aufgebrachten Gegenlast ausgeführte Stellbewegung der erstgenannten Antriebseinheit kann von einer geeigneten Erfassungseinrichtung erfasst werden, wobei ein entsprechendes Erfassungssignal die tatsächlich erzielte Stellbewegung wiedergibt und als Sensorsignal in der weiteren Simulation verwendet werden kann, insbesondere um in der vorgenannten Weise Bewegungen und/oder Positionen und/oder Verformungen der Strukturteile zu bestimmen und/oder die virtuelle Darstellung der Maschinenumgebung und/oder der darin sichtbaren Maschinenkomponenten zu simulieren.

Vorteilhafterweise werden mehrere solcher Antriebseinheiten bzw. mehrere solcher Antriebseinheiten-Paare umfassend Antrieb und Gegenlast-Antrieb sowie eine jeweils zugeordnete Erfassungseinrichtung verwendet, um die verschiedenen Stellbewegungs-Achsen und die diesbezüglich ausgeführten Stellbewegungen des zu simulierenden Maschinenbetriebs bestimmen zu können.

Die Sensorwerte der Antriebseinheiten der Stellbewegungsachsen, die in Abhängigkeit der am Steuerstand eingegebenen Steuerbefehle betätigt und bewegt werden, werden also nach einem weiteren Aspekt nicht mittels eines Rechenmodells simuliert bzw. berechnet, sondern anhand von Hardwarekomponenten, die den echten Stellantriebskomponenten der zu simulierenden Maschine möglichst nahe kommen, emuliert bzw. nachgestellt und direkt als tatsächliche Sensorwerte ausgegeben.

Durch ein solches Daten-Emulationssystem kann das Bewegungssimulationsmodul Bewegungen und/oder Positionen der Maschinenkomponenten sehr viel schneller und mit geringerer Rechenleistung bestimmen, so dass die virtuelle Darstellung der Maschinenumgebung und/oder der Maschinenkomponenten und auch die damit einhergehenden Stellbewegungen des Maschinenstands sehr viel rascher und realitätsnaher erreicht werden können. Zudem können die generierten Sensorsignale am Steuerstand angezeigt und/oder für weitere Überwachungsmassnahmen wie Traglastüberwachung oder Arbeitsbereichs-Begrenzungen, die am Steuerstand angezeigt und/oder simuliert werden können, verwendet werden.

Wird der Kransimulator zur Simulation eines Turmdrehkrans und dessen Betriebs verwendet, können die vorgenannten Antriebseinheiten-Paare zum Ausführen der entsprechenden Stellbewegungen und Bereitstellen des entsprechenden Gegenmoments bzw. Gegenlast insbesondere dem Turmdrehwerk - bzw. bei einem Obendreher dem Auslegerdrehwerk -, dem Hubwerk und dem Katzfahrwerk entsprechen.

Nach einem weiteren Aspekt ist das Bewegungssimulationsmodul derart ausgebildet, dass die Kran- bzw. Maschinenstruktur nicht als starre, sozusagen unendlich steife Struktur betrachtet wird, sondern als elastisch verformbare und/oder nachgiebige und/oder relativ weiche Struktur angenommen wird, die - zusätzlich zu den Stellbewegungsachsen der Maschine wie beispielsweise der Auslegerwippachse oder der Turmdrehachse - Bewegungen und/oder Positionsänderungen durch Verformungen der Strukturbauteile zulässt. Die Berücksichtigung der Beweglichkeit der Maschinenstruktur infolge von Strukturverformungen unter Last oder dynamischen Belastungen ist gerade bei langgestreckten, schlanken und von den statischen und dynamischen Randbedingungen her bewusst - unter Berücksichtigung der notwendigen Sicherheiten - ausgereizten Strukturen wie bei Kranen von Bedeutung, da hier spürbare Bewegungsanteile beispielsweise für die Kranführerkabine, aber auch die Lasthakenposition durch die Verformungen der Strukturbauteile hinzukommen. Um hier eine tatsächlich realistische Schulung bzw. ein realitätsnahes Training ermöglichen zu können, berücksichtigt das Bewegungssimulationsmodul solche Verformungen der Maschinenstruktur unter statischen oder dynamischen Belastungen.

Insbesondere kann die Bestimmungseinrichtung zur Bestimmung solcher Strukturverformungen eine Berechnungseinheit aufweisen, die diese Strukturverformungen anhand eines gespeicherten Berechnungsmodells in Abhängigkeit der am Steuerstand eingegebenen Steuerbefehle berechnet. Ein solches Modell kann ähnlich einem Finite-Elemente-Modell aufgebaut sein oder ein Finite-Elemente-Modell sein, wobei vorteilhafterweise jedoch ein gegenüber einem Finite-Elemente-Modell deutlich vereinfachtes Modell verwendet wird, das beispielsweise empirisch durch Erfassung von Strukturverformungen unter bestimmten Steuerbefehlen und/oder Belastungszuständen am echten Kran bzw. der echten Maschine bestimmt werden kann. Ein solches Berechnungsmodell kann beispielsweise mit Tabellen arbeiten, in denen bestimmten Steuerbefehlen bestimmte Verformungen zugeordnet sind, wobei Zwischenwerte der Steuerbefehle mittels einer Interpolationsvorrichtung in entsprechende Verformungen umgerechnet werden können.

Die Verwendung eines solchen gegenüber einem Finite-Elemente-Modell vereinfachten Berechnungsmodells erlaubt eine zeitlich schnellere Bestimmung der Strukturverformungen und damit eine realitätsnähere Simulation von Maschinenbewegungen in Echtzeit bzw. nahezu Echtzeit unter weniger Rechenleistung.

Die vom Bewegungssimulationsmodul berücksichtigten Strukturteilverformungen können einerseits bei der Ansteuerung der Antriebsvorrichtung zum Bewegen des Steuerstands berücksichtigt werden, so dass der Steuerstand die durch die Strukturteilverformungen auftretenden Steuerstandbewegungen nachbildet. Alternativ oder zusätzlich können die bestimmten Strukturteilverformungen auch bei der Berechnung der virtuellen Darstellung der Maschinenumgebung und/oder der darin sichtbaren Maschinenkomponenten berücksichtigt werden, beispielsweise dahingehend, dass in der virtuellen Darstellung die Durchbiegung des Auslegers dargestellt wird oder der Horizont der Kranumgebung ein Stück nach oben gefahren wird, um ein leichtes Nach-vorne-Nicken der Kranführerkabine durch beispielsweise eine Turmverformung nachzubilden.

Nach einem weiteren Aspekt wird vorgeschlagen, Kran- bzw. Maschinenreaktionen auf am Steuerstand eingegebene Steuerbefehle beispielsweise in Form von Kranbewegungen und/oder -verformungen nicht nur in Form einer virtuellen Darstellung auf der Anzeigevorrichtung darzustellen, sondern in eine mit der Kran- bzw. Maschinenreaktion einhergehende, tatsächliche Bewegung des Steuerstands umzusetzen, um dem Simulator-Nutzer die dynamischen Maschinenreaktionen realitätsnäher zu vermitteln und erfahren zu lassen. Der Steuerstand, der beispielsweise einen Bedienersessel umfassen kann, ist hierzu nicht mehr statisch starr im Raum, bzw. am Boden montiert, sondern von einer Antriebsvorrichtung im Raum bewegbar.

Insbesondere ist der Steuerstand beweglich gelagert und von einer Antriebsvorrichtung in Abhängigkeit der von dem Bewegungs-simulationsmodul bestimmten Bewegungen und/oder Verformung der Maschinenkomponenten bewegbar. Bestimmt das Bewegungssimulationsmodul Auslenkungen von Maschinenkomponenten wie beispielsweise des Kranturms durch Stellbewegungen oder Verformungen, die auf die Position der echten Kranführerkabine Einfluss hätten, wird die Antriebsvorrichtung von einer Antriebssteuervorrichtung entsprechend angesteuert, um die Bewegung der Kranführerkabine nachzubilden und den Steuerstand entsprechend zu bewegen. Wird beispielsweise am Steuerstand ein Befehl zum Verdrehen des Krans um eine aufrechte Achse eingegeben, wird der Steuerstand von der Antriebsvorrichtung entsprechend um die aufrechte Achse verdreht. Wird beispielsweise der Steuerbefehl zum Anheben einer schweren Last eingegeben, was in der Realität zu einem leichten Nicken der Kranstruktur unter leichter Verwindung des Turms führen kann, wird der Steuerstand von der Antriebsvorrichtung leicht nach vorne verfahren und/oder leicht nach vorne verkippt.

Um eine möglichst realitätsnahe Nachbildung der im echten Betrieb auftretenden Steuerstandbewegungen zu ermöglichen, kann die Antriebsvorrichtung mehrachsig bewegbar ausgebildet sein und/oder sowohl rotatorische als auch translatorische Bewegungen ausführen. Insbesondere kann der Steuerstand mehrachsig beweglich gelagert sein und die Antriebsvorrichtung zumindest eine aufrechte Drehachse und zumindest eine liegende Wippachse und/oder zwei liegend ausgerichtete Translationsachsen umfassen. Um auch komplexe Steuerstandsbewegungen nachbilden zu können, kann die Antriebsvorrichtung drei Rotations- bzw. Kippachsen aufweisen bzw. dreiachsig rotatorisch arbeitend ausgebildet sein und dreiachsig translatorisch arbeitend ausgebildet sein, so dass der Steuerstand um alle drei Raumachsen verdreht bzw. verkippt und in alle drei Raumrichtungen translatorisch verfahren werden kann. Je nach zu simulierendem Kran- bzw. Maschinentyp können auch einfachere Ausbildungen der Antriebsvorrichtung mit weniger Bewegungsachsen in Betracht kommen.

Um das Realitätsempfinden des Nutzers des Simulators weiter zu erhöhen, ist nach einem weiteren Aspekt vorgesehen, dass auf der Anzeigevorrichtung die von dem grafischen Simulationsmodul bereitgestellten virtuellen Darstellungen aus der Simulationswelt mit Livebildern aus dem Steuerstand, die beispielsweise Bewegungen des Simulator-Nutzers zeigen können, überlagert werden. Insbesondere können auf der Anzeigevorrichtung einerseits die vom grafischen Simulationsmodul generierten virtuellen Darstellungen der Maschinenumgebung und/oder der darin sichtbaren Maschinenkomponenten und andererseits am Steuerstand aufgenommene Livebilder einer Livekamera gleichzeitig und überlagert dargestellt werden. Eine solche Überlagerung von Bildern aus der Simulationswelt und Livebildern gibt dem Simulatornutzer ein besonders starkes Gefühl der Realitätsnähe.

Vorteilhafterweise kann hierzu als Anzeigevorrichtung eine am Kopf tragbare, insbesondere brillenartig ausgebildete Anzeigevorrichtung beispielsweise in Form einer Virtual-Reality-Brille und eine vorteilhafterweise ebenfalls am Kopf tragbare, beispielsweise als Helmkamera ausgeführte oder in die genannte Virtual-Reality-Brille integrierte Kamera Verwendung finden, die die genannten Livebilder bereitstellt, die zusammen mit der künstlich generierten, virtuellen Darstellung auf der Anzeigevorrichtung, insbesondere der Virtual-Reality-Brille, dargestellt werden.

Die genannte Kamera für die Bereitstellung der Livebilder kann vorteilhafterweise eine Stereoskopkamera sein, die stereoskopische Bilder vorzugswesie in zumindest näherungsweise mit der Blickrichtung des Augenpaars eines Nutzers übereinstimmender Kamerablickrichtung bereitstellt, welche an entsprechender Stelle der Anzeigevorrichtung, insbesondere der Virtual-Reality-Brille eingeblendet werden können. Hierdurch kann ein besonders realitätsnahes Nutzerempfinden erreicht werden.

Grundsätzlich wäre es aber auch möglich, Bilder aus der Simulationswelt und die genannten Livebilder auf einem an sich herkömmlichen Bildschirm zu überlagern, wobei hier beispielsweise ein Nutzer eine Livebildkamera am Kopf tragen könnte, die zumindest näherungsweise der Blickrichtung des Nutzers entsprechende Bilder bereitstellt, so dass auf der Anzeigevorrichtung beispielsweise in Form mehrerer Bildschirme dann auch ein live aufgenommener Benutzerarm bzw. der live aufgenommene Teil des Steuerstands eingeblendet werden kann. Eine realitätsnähere und damit eindrücklicher aufnehmbare Simulation kann jedoch durch Überlagerung auf den Sichtflächen eienr Virtual Reality Brille erreicht werden.

Die Überlagerungseinrichtung zum Überlagern der Livebilder der Kamera mit der virtuellen Darstellung aus dem grafischen Simulationsmodul kann vorteilhafterweise nach der sog. Green-Screen-Technik arbeitend ausgebildet sein, wobei die Überlagerungseinrichtung in dem Livebild Farbflächen einer vorbestimmten Farbe erkennt und diese Bildbereiche dann durch die virtuelle Darstellung aus dem Simulationsmodul ersetzt. Hierzu kann vorteilhafterweise der Steuerstand eine Führerkabinenwandung umfassen, in der Fensterbereiche - beispielsweise entsprechend den Sichtfenstern einer echten Kranführerkabine - in einer Schlüsselfarbe eingefärbt sind, die sich von den restlichen Farben der übrigen im Kamerablickfeld liegenden Komponenten wie beispielsweise der Farbe der Fenstereinrahmungen, der Eingabemittel und der Bediener-Bekleidung sowie - Hautfarbe möglichst deutlich unterscheidet, so dass das im Steuerstand aufgenommene Livebild die genannten eingefärbten Flächen in einer bestimmten Farbwiedergabe zeigt, während alle anderen Bildflächen in anderen Farben gezeigt sind. Die in der genannten Schlüsselfarbe - beispielsweise grün - gefärbten Livebildflächen bzw. -teilflächen werden dann durch die virtuelle Darstellung der Maschinenumgebung und/oder der darin sichtbaren Maschinenkomponenten ersetzt, so dass das überlagerte Bild bzw. die überlagerte Darstellung einerseits den Steuerstand des Simulators, dessen Komponenten und sich im Sichtfeld der Livekamera befindliche Körperglieder des Nutzers in echt als Livebild zeigt und andererseits in den von der Livekamera aufgenommenen Fensterbereichen der Führerkabinenwandung die virtuelle Darstellung der Maschinenumgebung und der darin sichtbaren Maschinenkomponenten zeigt.

Die genannte virtuelle Darstellung der Maschinenumgebung kann von dem grafischen Simulationsmodul vorteilhafterweise verändert und in Abhängigkeit von verschiedenen Datensätzen, die über eine Schnittstelle in das Simulationsmodul einspielbar sind, verschiedenen Szenarien angepasst werden. Insbesondere können Planungsdaten wie CAD-Daten eines herzustellenden Bauwerks und/oder Baustellen-Istdaten, die je nach Baufortschritt den Istzustand eines entstehenden Gebäudes oder Bauwerks wiedergeben, über eine entsprechende Datenschnittstelle in das Simulationsmodul eingespielt werden und von dem Simulationsmodul dazu verwendet werden, die virtuelle Darstellung der Maschinenumgebung entsprechend dem eingespielten Datensatz, insbesondere in Abhängigkeit der eingespielten Planungsdaten und/oder Baustellen-Istdaten, zu generieren bzw. daran anzupassen.

Die Verknüpfung des grafischen Simulationsmoduls mit Baustellen- bzw. Bauwerkinformationen ermöglicht es, den Simulator gezielt zum Training der auszuführenden Arbeiten für ein bestimmtes Bauwerk oder eine bestimmte Baustelle zu nutzen. Ist beispielsweise eine komplizierte Kranhubbewegung auszuführen, die eine Last an verschiedenen Hindernissen vorbeijonglieren und beispielsweise in einem nicht sichtbaren Bauwerksbereich absetzen muss, kann dies am Simulator auch wiederholt trainiert werden.

Die genannten Baustellen- bzw. Bauwerksinformationen können in der vorgenannten Weise CAD-Daten oder andere Geometriedaten des Bauwerks oder der Baustelle sein, wobei ggf. auch digitale Bilddaten Verwendung finden können, die das tatsächliche Bauwerk und dessen Baufortschritt wiedergeben. Derartige Bilddaten können als Maschinenumgebungsdaten über die genannte CAD-Schnittstelle bzw. eine geignete Bilddaten-Schnittstelle in das grafische Simulationsmodul eingespielt werden, welches dann die virtuelle Darstellung an diese übernommenen CAD- und/oder Bilddaten anpasst.

Die Modellierung einer geplanten oder schon existierenden oder teilweise ausgeführten Baustelle und die entsprechende Generierung der virtuellen Darstellung der Maschinenumgebung durch das grafische Simulationsmodul ist insbesondere auch ein wertvolles Hilfsmittel, um die Logistik auf einer Baustelle sicherzustellen und auch bereits vor Baubeginn kritische Abläufe simulieren und einüben zu können.

In Weiterbildung der Erfindung kann auch eine Verwendung des Simulators als Fernsteuereinrichtung zum Fernsteuern eines "echten" Krans, einer Baumaschine oder eines Flurförderzeugs vorgesehen sein, wobei vorteilhafterweise zwischen dem Kran, der Baumaschine und/oder dem Flurförderzeug einerseits und dem Simulator andererseits eine Kommunikationsverbindung vorgesehen werden kann, über die am Steuerstand des Simulators eingegebene Steuerbefehle an die Steuereinrichtung des Krans, der Baumaschine und/oder des Flurförderzeugs übertragbar sind. Der "echte" Kran bzw. das jeweils ferngesteuerte "echte" Gerät führt die am Steuerstand des Simulators eingegebenen Steuerbefehle aus, gleichzeitig zeigt die vom Simulator generierte virtuelle Darstellung der Kranumgebung und der darin sichtbaren Krankomponenten an, wie der Kran die Steuerbefehle umsetzt. Hierbei kann vorgesehen sein, die am echten Kran erfassten Bewegungsparameter und Sensorsignale auf den Simulator rückzuspeisen und dort für die Generierung der virtuellen Darstellung der Kranumgebung zu verwenden, um sicherzustellen, dass tatsächlich eine der tatsächlichen Kranumgebung und -stellung entsprechende Darstellung auf der Anzeigevorrichtung des Simulators angezeigt wird.

Unabhängig von der genannten Option der Verwendung als Fenrstuerstation, Die Erfindung wird nachfolgend anhand eines bevorzugten Ausführungsbeispiels und zugehöriger Zeichnungen näher erläutert. In den Zeichnungen zeigen:
- Fig. 1:: eine schematische Darstellung der Komponenten eines Kransimulators nach einer vorteilhaften Ausführung der Erfindung,
- Fig. 2:: eine schematische Darstellung der Hardwarekomponenten für die Datenemulation des Bewegungssimulationsmoduls, und
- Fig. 3:: eine schematische, blockschaltbildartige Darstellung des Gesamtkonzepts des Simulators aus den vorhergehenden Figuren und der funktionalen Interaktion der Komponenten hiervon.

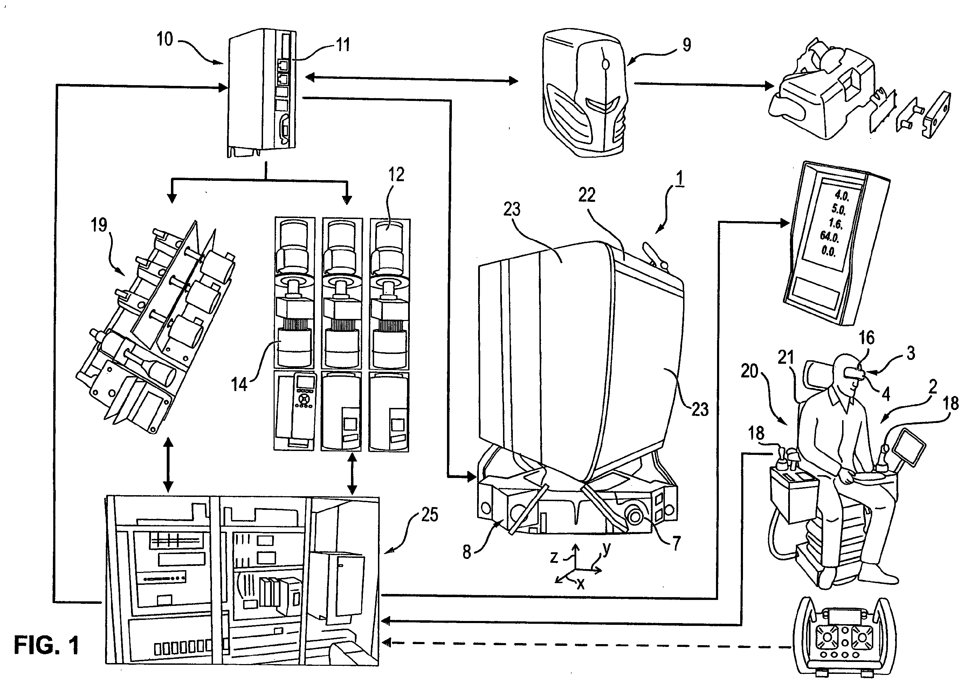

Wie Fig. 1 zeigt, kann der Simulator 1 als Kransimulator ausgebildet sein, der einen Steuerstand 2 in Form einer Kranführerkabine umfasst, die im Wesentlichen einer "echten" Kranführerkabine, wie sie an einem Kran, beispielsweise einem Turmdrehkran, einem Hafenkran oder einem Maritimkran oder Mobil-Teleskopkran Verwendung finden kann.

Der genannte Steuerstand 2 kann hierbei in an sich bekannter Weise einen Bedienersitzplatz 21 beispielsweise in Form eines Bedienersessels 20 umfassen, um den herum diverse Eingabemittel 18 zum Eingeben von Steuerbefehlen angeordnet sind. Die genannten Eingabemittel 18 können beispielsweise einen Joystick, ein Touchscreen, Steuerhebel, Eingabetasten und -schalter, Drehregler, Schieberegler und Ähnliches aufweisen.

Der Bedienerplatz ist hierbei von einer Führerstandwandung 22 umgeben, die einer Kabineneinhausung entsprechen kann und Fensterbereiche 23 aufweisen kann, die bei echten Kranführerkabinen verglast sind, im vorliegenden Fall jedoch in einer bestimmten Farbe eingefärbt, beispielsweise mit einer grünen Folie beschichtet sind, um mittels Green-Screen-Technik eine virtuelle Maschinenumgebung einblenden zu können, wie noch erläutert wird.

Der Steuerstand 2 ist auf einer Bewegungsplattform 7 montiert, mittels derer der Steuerstand 2 mehrachsig beweglich ist. Die Bewegungsplattform 7 ist dabei vorteilhafterweise mehrachsig beweglich ausgebildet, insbesondere um alle drei Raumachsen x, y und z verkipp- bzw. verdrehbar und entlang dieser Achsen translatorisch verschieblich.

Den Bewegungsachsen x, y und z der Bewegungsplattform 7 sind dabei Aktoren einer Antriebsvorrichtung 8 zugeordnet, beispielsweise in Form von Elektromotoren und/oder Hydraulikzylindern und/oder Hydraulikmotoren, um den Steuerstand 2 um die bzw. entlang der genannten Achsen bewegen zu können.

Die Antriebsvorrichtung 8 wird dabei von einer Bewegungssteuervorrichtung 24 angesteuert, die beispielsweise durch einen Industrie-PC realisiert sein kann.

Die genannte Bewegungssteuervorrichtung 24 kann dabei insbesondere Teil eines Bewegungssimulationsmoduls 10 sein, mittels dessen Kranbewegungen und/oder Positionen und/oder Ausrichtungen von Krankomponenten wie beispielsweise des Auslegers oder des Turms und auch Verwindungen von Strukturbauteilen wie des Auslegers oder des Turms in Abhängigkeit der jeweils am Steuerstand 2 eingegebenen Steuerbefehle bestimmt werden können. Das genannte Bewegungssimulationsmodul 10 bestimmt sozusagen die Auswirkungen der eingegebenen Steuerbefehle auf den zu simulierenden Kran, d.h. welche Bewegungen, Positionen, Ausrichtungen und Verwindungen der Krankomponenten sich infolge eingegebener Steuerbefehle sich am zu simulierenden Kran ergeben würden und gibt entsprechende, die genannten Größen charakterisierende Bewegungssignale aus.

Das genannte Bewegungssimulationsmodul 10 bestimmt die genannten Bewegungsgrößen hierbei nicht bzw. nicht vollständig durch Berechnung anhand eines Rechenmodells, sondern greift auf tatsächliche Hardwarekomponenten in Form von Antriebs- und Steuerungskomponenten zurück, die tatsächliche Bewegungen ausführen und den entsprechenden Hardwarekomponenten an einem echten Kran nachgebildet sind.

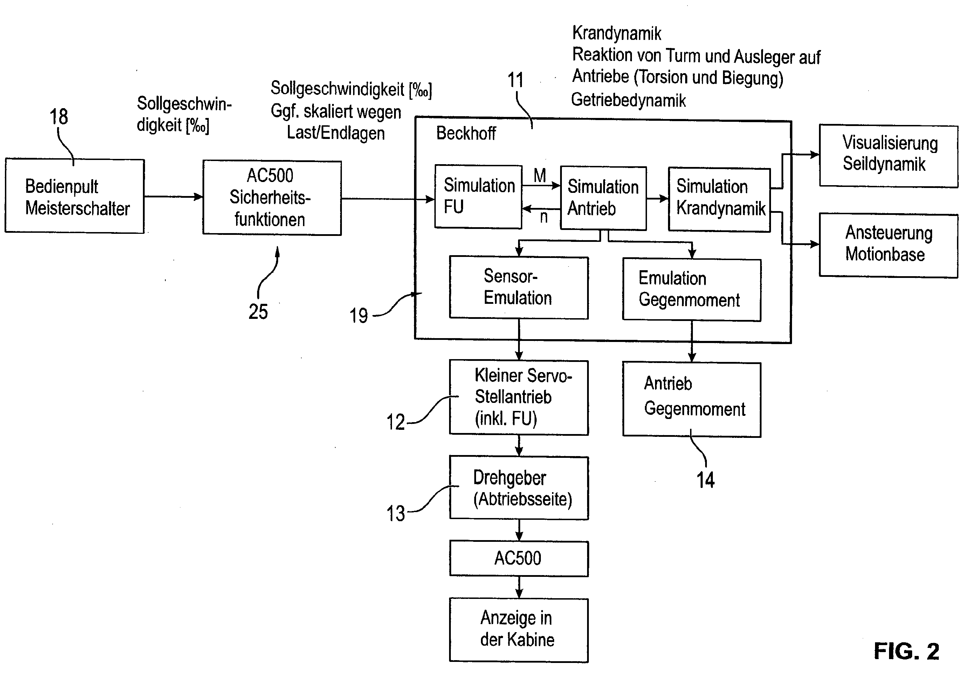

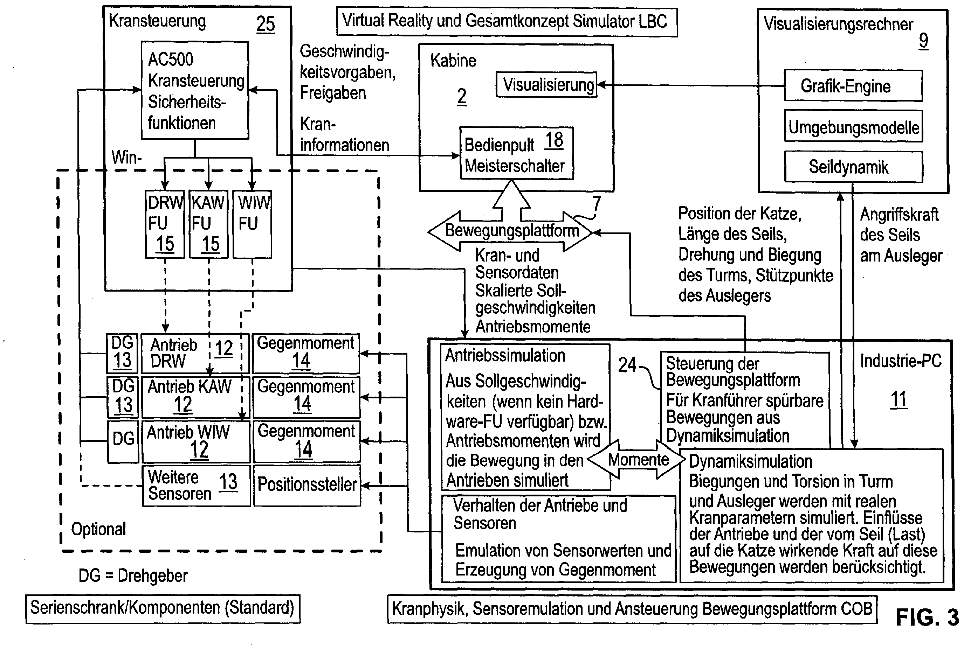

Wie die Figuren 2 und 3 in größerem Detail zeigen, umfasst das Bewegungssimulationsmodul 10 zumindest die wesentlichen Komponenten einer Kransteuerung 25, wie diese beispielsweise im Schaltschrank eines Krans realisiert sein kann. Insbesondere umfasst die genannte Kransteuerung 25 die Frequenzumrichter 15 verschiedener Kranantriebe, beispielsweise des Drehwerks, des Katzfahrwerks und des Hubwerks. Die genannte Kransteuerung 25 kann ggf. weitere Steuerungs- und/oder Leistungselektronikbauteile umfassen, insbesondere Lastüberwachungskomponenten, Arbeitsbereichs-Beschränkungskomponenten etc.

Die Kransteuerung 25 ist mit dem Steuerstand 2 und dessen Eingabemitteln 18 kommunikativ verbunden, so dass die Kransteuerung 25 die eingegebenen Steuerbefehle weiter verarbeiten kann, wobei insbesondere die Frequenzumrichter 15 in Abhängigkeit der eingegebenen Steuerbefehle Antriebseinheiten 12 beispielsweise in Form von Servoantrieben ansteuern. Die am Steuerstand 2 eingegebenen Steuerbefehle werden also in reale Bewegungen bzw. Antriebsmomente und -kräfte der Antriebseinheiten 12 umgesetzt.

Die genannten Antriebseinheiten 12 sind hierbei mit Gegenantriebseinheiten 14 kuppelbar, über die auf die Antriebseinheiten 12 Bewegungswiderstände aufgeschaltet werden können, um echten Widerständen wie Hublasten, Windkräfte, Trägheiten oder dynamische Belastungen nachbilden zu können. Die genannten Gegenantriebseinheiten 14 können von dem vorgenannten Industrie-PC angesteuert werden, der auch die Bewegungssteuervorrichtung 24 realisiert. Die Ansteuerung der Gegenantriebseinheiten 14 kann hierbei anhand verschiedener Vorgaben oder Programme erfolgen, beispielsweise durch vorgebbare Hublasten, vorgebbare Windprogramme oder anhand von vorbestimmten Funktionen oder Tabellen wie Dynamikreaktionen beim Abbremsen des Katzfahrwerks oder der Drehbewegung. Hierzu können in einem Speicherbaustein der Steuervorrichtung zum Ansteuern der Gegenantriebseinheiten 14 entsprechende Modelle, Tabellen bzw. Funktionen abgespeichert sein.

Wie die Figuren 2 und 3 zeigen, sind den Antriebseinheiten 12 Erfassungseinrichtungen 13 beispielsweise in Form von Drehgebern oder anderen Positions- und/oder Bewegungssensoren zugeordnet, mittels derer Bewegungs- bzw. Stellungssignale bereitgestellt werden, die die Stellbewegungen der Antriebseinheiten 12 charakterisieren. Das Bewegungssimulationsmodul 10 stellt also echte Sensorsignale als Bewegungsparameter bereit, die einerseits am Steuerstand 2 angezeigt werden können und andererseits auch für weitergehende Simulationsfunktionen verwendet werden können. Insbesondere können in Abhängigkeit der genannten Bewegungssignale, die die Drehgeber bereitstellen, Strukturverwindungen wie Turmbiegungen, Auslegerbiegungen und ähnliche Verformungen anhand eines Rechenmodells bestimmt werden und die Antriebsvorrichtung 8 der Bewegungsplattform 7 zum Bewegen des Steuerstands 2 angesteuert werden sowie die virtuelle Darstellung der Kranumgebung generiert werden, jeweils in Abhängigkeit der genannten, real erzeugten Sensorsignale.

Wie Fig. 3 zeigt, kann das Bewegungssimulationsmodul 10 eine Rechnereinheit 11 umfassen, die wiederum von dem vorgenannten Industrie-PC realisiert sein kann, mittels welcher Rechnereinheit 11 in Abhängigkeit der am Steuerstand 2 eingegebenen Steuerbefehle und/oder der emulierten Daten, die durch die Datenemulationseinrichtung 19 bzw. der den Antriebseinheiten 12 zugeordneten Erfassungseinrichtung 13 erzeugten Sensorsignale generiert werden, Strukturverwindungen bestimmt werden, insbesondere Biegungen und Torsion im Kranturm und im Kranausleger, wobei die Rechnereinheit 11 hierzu ein die Struktursteifigkeiten berücksichtendes Rechenmodell verwendet, wie eingangs erläutert.

Anhand der genannten, emulierten Bewegungsdaten sowie der hieraus bestimmten Verformungsdaten steuert die Bewegungssteuervorrichtung 24 die Antriebsvorrichtung 8 der Bewegungsplattform 7 an, um den Steuerstand 2 zu bewegen und echte Kranführerkabinen-Bewegungen nachzubilden, die bei Eingabe entsprechender Steuerbefehle in einem echten Kran auftreten würden.

Zum anderen werden die genannten Bewegungsdaten und ggf. auch die genannten Verformungsdaten verwendet, um Kranreaktionen in einer virtuellen Darstellung zu berücksichtigen, die von einem grafischen Simulationsmodul 9 generiert und auf einer Anzeigevorrichtung 3 angezeigt wird. Die genannte virtuelle Darstellung zeigt dabei insbesondere die Kranumgebung sowie darin sichtbare Krankomponenten wie beispielsweise den Kranausleger und den Lasthaken und kann im Wesentlichen dem Bild entsprechen, welches ein Kranführer aus der Kranführerkabine sehen würde. Die genannte virtuelle Darstellung kann hierbei in Form eines foto- oder filmähnlichen Digitalbilds, beispielsweise einer Pixeldarstellung in mehreren Farben entsprechen. Alternativ kann aber auch eine vereinfachte grafische Darstellung vorgesehen sein, wenngleich ein möglichst realistisches, foto- oder filmähnliches Darstellungsbild bevorzugt ist.

Vorteilhafterweise wird dabei die genannte virtuelle Darstellung der Kranumgebung und der darin sichtbaren Krankomponenten durch ein Livebild überlagert, welches reale Komponenten aus dem Steuerstand 2 zeigt, insbesondere vom Kopf des Simulatornutzers in dessen Blickrichtung aus sichtbare Bauteile wie die Eingabemittel 18, die Hände und den Unterarm des Nutzers und andere im Blickfeld liegende Komponenten.

Hierzu ist vorteilhafterweise eine Kamera 16 vorgesehen, die als am Kopf des Nutzers tragbare Kopfkamera ausgebildet sein kann und entsprechende Befestigungs- und/oder Haltemittel zum Befestigen am Kopf aufweisen kann, beispielsweise in Form einer Helmkamera. Ist die Anzeigevorrichtung 3 vorteilhafterweise in Form einer Virtual-Reality-Brille 4 ausgebildet, die der Nutzer trägt, kann die Kamera 16 in diese VR-Brille integriert sein.

Vorteilhafterweise ist die Kamera 16 dabei als Stereoskopkamera ausgebildet, um stereoskopische Bilder entsprechend den Blickachsen der beiden Augen des Nutzers bereitstellen zu können.

Die Überlagerungsvorrichtung 17 zum Überlagern des vom grafischen Simulationsmodul 9 generierten virtuellen Darstellung der Kranumgebung und des Livebilds der Kamera 16 kann hierbei insbesondere ein farbbasiertes Bildbearbeitungsmodul 26 umfassen, das nach der sog. Green-Screen-Technik arbeiten kann. Insbesondere kann das genannte farbbasierte Bildbearbeitungsmodul 26 im Livebild der Kamera 16 Bildbereiche erkennen, die eine bestimmte, von den restlichen Bildteilflächen abweichende Farbe besitzen, und diese Bildbereiche dann durch die virtuelle Darstellung aus dem Simulationsmodul 9 ersetzen.

Hierzu kann vorteilhafterweise der Steuerstand 2 eine Führerkabinenwandung 22 umfassen, in der Fensterbereiche 23 - beispielsweise entsprechend den Sichtfenstern einer echten Kranführerkabine - in einer Schlüsselfarbe eingefärbt sind, die sich von den restlichen Farben der übrigen im Kamerablickfeld liegenden Komponenten wie beispielsweise der Farbe der Fenstereinrahmungen, der Eingabemittel 18 und der Bediener-Bekleidung sowie -Hautfarbe möglichst deutlich unterscheidet, so dass das im Steuerstand 2 aufgenommene Livebild die genannten eingefärbten Flächen in einer bestimmten Farbwiedergabe zeigt, während alle anderen Bildflächen in anderen Farben gezeigt sind. Die in der genannten Schlüsselfarbe - beispielsweise grün - gefärbten Livebildflächen bzw. - teilflächen werden dann durch die virtuelle Darstellung der Maschinenumgebung und/oder der darin sichtbaren Maschinenkomponenten ersetzt, die vom grafischen Simulationsmodul 9 generiert wird, so dass das überlagerte Bild bzw. die überlagerte Darstellung einerseits den Steuerstand 2 des Simulators, dessen Komponenten und sich im Sichtfeld der Livekamera befindliche Körperglieder des Nutzers in echt als Livebild zeigt und andererseits in den von der Livekamera 16 aufgenommenen Fensterbereichen 23 der Führerkabinenwandung 22 die virtuelle Darstellung der Maschinenumgebung und der darin sichtbaren Maschinenkomponenten zeigt.

Die genannte virtuelle Darstellung der Maschinenumgebung kann von dem grafischen Simulationsmodul 9 vorteilhafterweise verändert und in Abhängigkeit von verschiedenen Datensätzen, die über eine Schnittstelle in das Simulationsmodul einspielbar sind, verschiedenen Szenarien angepasst werden. Insbesondere können Planungsdaten wie CAD-Daten eines herzustellenden Bauwerks und/oder Baustellen-Istdaten und/oder Bilddaten, die je nach Baufortschritt den Istzustand eines entstehenden Gebäudes oder Bauwerks wiedergeben, über eine entsprechende Datenschnittstelle, beispilesweise eine CAD-Schnittstelle und/oder eine Bilddatenschnittstelle, in das Simulationsmodul 9 eingespielt werden und von dem Simulationsmodul 9 dazu verwendet werden, die virtuelle Darstellung der Maschinenumgebung entsprechend dem eingespielten Datensatz, insbesondere in Abhängigkeit der eingespielten Planungsdaten und/oder Baustellen-Istdaten, die virtuelle Darstellung der Maschinenumgebung zu generieren bzw. daran anzupassen.

## Patentansprüche

1. Simulator für einen Kran, eine Baumaschine oder ein Flurförderzeug, mit einem Steuerstand (2), der zumindest ein Eingabemittel (18) zum Eingeben von Steuerbefehlen aufweist, einem grafischen Simulationsmodul (9) zum Berechnen einer virtuellen Darstellung der Maschinenumgebung und/oder von aus dem Steuerstand (2) sichtbaren Maschinenkomponenten, sowie einer Anzeigevorrichtung (3) zum Anzeigen der berechneten virtuellen Darstellung, wobei ein Bewegungssimulationsmodul (10) zum Bestimmen von Bewegungen und/oder Verformungen von Maschinenkomponenten wie Kranausleger oder Lasthaken in Abhängigkeit der eingegebenen Steuerbefehle vorgesehen ist und das grafische Simulationsmodul (9) zum Berechnen der virtuellen Darstellung in Abhängigkeit der bestimmten Bewegungen und/oder Verformungen ausgebildet ist, **dadurch gekennzeichnet, dass** das Bewegungssimulationsmodul (10) eine Datenemulations-Einrichtung (19) zur Emulation von Bewegungsdaten der zu simulierenden Maschine umfasst, wobei die genannte Datenemulations-Einrichtung (19) zumindest eine Antriebseinheit (12) zum Ausführen von Stellantriebsbewegungen in Abhängigkeit von am Steuerstand (2) eingegebenen Steuerbefehlen, zumindest eine weitere Antriebseinheit (14) zum Bereitstellen eines Gegenmoments und/oder einer Gegenlast, welche weitere Antriebseinheit (14) mit der zumindest einen Antriebseinheit (12) kuppelbar ist, sowie eine Erfassungseinrichtung (13) zum Erfassen der Bewegungen der Antriebseinheit (12) und Bereitstellen eines Bewegungs- und/oder Positionssignals umfasst, wobei das genannte Bewegungs- und/oder Positionssignal die tatsächlich erzielte Stellbewegung wiedergibt und als Sensorsignal in der weiteren Simulation verwendet wird, und die grafische Simulationsvorrichtung zum Generieren der virtuellen Darstellung unter Berücksichtigung der ausgeführten Stellantriebsbewegung ausgebildet ist.

2. Simulator nach dem vorhergehenden Anspruch, wobei das Bewegungssimulationsmodul (10) zumindest eine Leistungssteuerungs-Komponente, insbesondere in Form eines Frequenzumrichters (15), zum Ansteuern der zumindest einen Antriebseinheit (12) aufweist.

3. Simulator nach dem vorhergehenden Anspruch, wobei das Bewegungssimulationsmodul (10) den Schaltschrank und/oder die Steuerungseinheit umfasst, die dem Schaltschrank und/oder der Steuerungseinheit der zu simulierenden Maschine entspricht oder diesem/dieser nachgebildet ist.

4. Simulator nach dem Oberbegriff des Anspruchs 1 oder einem der vorhergehenden Ansprüche, wobei der Steuerstand (2) beweglich gelagert ist und eine Antriebsvorrichtung (8) zum Bewegen des Steuerstands (2) in Abhängigkeit der von dem Bewegungssimulationsmodul (10) bestimmten Bewegungen und/oder Verformungen vorgesehen ist.

5. Simulator nach dem vorhergehenden Anspruch, wobei der Steuerstand (2) mehrachsig beweglich gelagert ist und die Antriebsvorrichtung (8) mehrere Bewegungsachsen (x, y, z), vorzugsweise umfassend mehrere rotatorische Bewegungsachsen und/oder mehrere translatorische Bewegungsachsen, aufweist, die in Abhängigkeit von am Steuerstand (2) eingegebenen Steuerbefehlen betätigbar sind.

6. Simulator nach einem der beiden vorhergehenden Ansprüche, wobei der Steuerstand (2) auf einer Bewegungsplattform (7) gelagert ist, in die die Antriebsvorrichtung (8) integriert ist.

7. Simulator nach dem Oberbegriff des Anspruchs 1 oder einem der vorhergehenden Ansprüche, wobei das Bewegungssimulationsmodul (10) eine Bestimmungseinrichtung zum Bestimmen von Verformungen von Strukturbauteilen der zu simulierenden Maschine in Abhängigkeit von am Steuerstand (2) eingegebenen Steuerbefehlen aufweist, wobei die genannte Bestimmungseinrichtung eine Rechnereinheit (11) zum Berechnen der Verformungen anhand eines gespeicherten Verformungsmodells der Strukturbauteile aufweist.

8. Simulator nach dem vorhergehenden Anspruch, wobei das grafische Simulationsmodul (9) zum Generieren der virtuellen Darstellung in Abhängigkeit der berechneten Verformungen der Strukturbauteile ausgebildet ist und/oder eine Steuervorrichtung zum Ansteuern der Antriebsvorrichtung (8) in Abhängigkeit der berechneten Verformungen der Strukturbauteile vorgesehen ist.

9. Simulator nach dem Oberbegriff des Anspruchs 1 oder einem der vorhergehenden Ansprüche, wobei zumindest eine Kamera (16) zum Erfassen von Livebildern am Steuerstand (2) vorgesehen ist und der zumindest einen Anzeigevorrichtung (3) eine Überlagerungsvorrichtung (17) zugeordnet ist, die zum Überlagern der von dem grafischen Simulationsmodul (9) generierten virtuellen Darstellung mit dem von der Kamera (16) bereitgestellten Livebild auf der Anzeigevorrichtung (3) vorgesehen ist.

10. Simulator nach dem vorhergehenden Anspruch, wobei die Kamera (16) eine Kopfhalterung zum Tragen der Kamera am Kopf des Simulatorbenutzers aufweist und/oder als Kopf- und/oder Helmkamera ausgebildet ist, wobei die Kamera (16) als Stereoskopkamera zum Bereitstellen stereoskopischer Bilder zumindest näherungsweise in der Blickrichtung des Simulatornutzers ausgebildet ist, wobei die zumindest eine Anzeigevorrichtung (3) eine Kopfhalterung zum Tragen am Kopf des Simulatorbenutzers aufweist und/oder als Anzeigebrille ausgebildet ist, insbesondere in Form einer Virtual-Reality-Brille mit integrierter Kamera (16).

11. Simulator nach Anspruch 9 oder 10, wobei der Steuerstand (2) eine Führerhauswandung umfasst, in der Sichtfenster ausgebildet sind, wobei die genannten Sichtfenster in einer bestimmten Farbe eingefärbt sind, wobei das grafische Simulationsmodul (9) und/oder die Überlagerungseinrichtung (17) eine farbsensitive Einblendeeinheit zum Einblenden der virtuellen Darstellung in die Bildflächen des von der Kamera (16) bereitgestellten Livebilds, die in der vorgenannten, bestimmten Farbe eingefärbt sind, aufweist.

12. Simulator nach dem Oberbegriff des Anspruchs 1 oder einem der vorhergehenden Ansprüche, wobei das grafische Simulationsmodul (9) eine Datenschnittstelle zum Einspielen von Bauwerks- und/oder Baustellendaten aufweist und eine Bildverarbeitungseinrichtung zum Generieren und/oder Anpassen der virtuellen Darstellung der Maschinenumgebung in Abhängigkeit der eingespielten Baustellen- und/oder Bauwerksdaten aufweist.

13. Simulator nach dem vorhergehenden Anspruch, wobei die genannte Datenschnittstelle eine CAD-Schnittstelle ist und die Bildverarbeitungseinrichtung zum Generieren und/oder Anpassen der virtuellen Darstellung der Maschinenumgebung in Abhängigkeit der über die CAD-Schnittstelle eingespielten CAD-Daten ausgebildet ist, und/oder eine Bilddaten-Schnittstelle ist und die Bildverarbeitungseinrichtung zum Generieren und/oder Anpassen der virtuellen Darstellung der Maschinenumgebung in Abhängigkeit der über die Bilddaten-Schnittstelle eingespielten, vorzugsweise digitalen Bilddaten ausgebildet ist.

14. Verwendung eines Simulators gemäß einem der vorhergehenden Ansprüche als Fernsteuereinrichtung zum Fernsteuern eines Krans, einer Baumaschine oder eines Flurförderzeugs.

15. System umfassend einen Simulator (1), der gemäß einem der Ansprüche 1-13 ausgebildet ist, sowie einen Kran, eine Baumaschine oder ein Flurförderzeug, wobei zwischen dem Kran, der Baumaschine und/oder dem Flurförderzeug einerseits und dem Simulator (1) andererseits eine Kommunikationsverbindung vorgesehen ist, über die am Steuerstand (2) des Simulators (1) eingegebene Steuerbefehle an die Steuereinrichtung des Krans, der Baumaschine und/oder des Flurförderzeugs übertragbar sind.

## Claims

1. Simulator for a crane, a construction machine or an industrial truck, with a control station (2) comprising at least one input means (18) for inputting control commands, a graphical simulation module (9) for calculating a virtual representation of the machine environment and / or machine components visible from the control station (2), as well as a display device (3) for displaying the calculated virtual representation, wherein a movement simulation module (10) for determining movements and / or deformations of machine components such as the crane jib or the load hook depending on the entered control commands is provided, and the graphical simulation module (9) is configured for calculating the virtual representation depending on the determined movements and / or deformations, **characterized in that** the movement simulation module (10) includes a data emulation apparatus (19) for emulating movement data of the machine to be simulated, wherein the mentioned data emulation apparatus (19) includes at least one drive unit (12) for performing an actuator movement depending on a control command entered at the control station (2) and the graphical simulation device is configured to generate the virtual representation under consideration of the performed actuator movement, at least one further drive unit (14) for providing a counter movement and/or a counter load, which further drive unit (14) can be coupled with the at least one drive unit (12), as well as a detection device (13) for detecting the movements of the drive unit (12) and providing a movement signal and/or position signal, wherein the mentioned movement signal and/or position signal represents the actually obtained actuating movement and is used as sensor signal in the further simulation, and the graphical simulation device is configured for generating the virtual representation under consideration of the performed actuator movement.

2. Simulator according to the preceding claim, wherein the movement simulation module (10) comprises at least one power control component, in particular in the form of a frequency converter (15), for controlling the at least one drive unit (12).

3. Simulator according to the preceding claim, wherein the movement simulation module (10) includes the control cabinet and/or the control unit, which corresponds to the control cabinet and/or the control unit of the machine to be simulated or is emulated corresponding to the same.

4. Simulator according to the preamble of claim 1 or one of the preceding claims, wherein the control station (2) is moveably mounted and a drive apparatus (8) is provided for moving the control station (2) depending on the movements and/or deformations determined by the movement simulation module (10).

5. Simulator according to the preceding claim, wherein the control station (2) is mounted to be moveable along multiple axes, and the drive apparatus (8) comprises multiple movement axes (x, y, z), preferably including multiple rotary movement axes and/or multiple translatory movement axes, which can be actuated depending on control commands entered at the control station (2).

6. Simulator according to one of the two preceding claims, wherein the control station (2) is mounted on a movement platform (7), into which the drive apparatus (8) is integrated.

7. Simulator according to the preamble of claim 1 or one of the preceding claims, wherein the movement simulation module (10) comprises a determination device for determining deformations of structural components of the machine to be simulated depending on the control commands entered at the control station (2), wherein the mentioned determination device comprises a computing unit (11) for calculating the deformations based upon a stored deformation model of the structural components.

8. Simulator according to the preceding claim, wherein the graphical simulation module (9) is configured to generate the virtual representation depending on the calculated deformations of the structural components and/or a control device is provided for controlling the drive apparatus (8) depending on the calculated deformations of the structural components.

9. Simulator according to the preamble of claim 1 or one of the preceding claims, wherein at least one camera (16) for capturing live images at the control station (2) is provided, and the at least one display device (3) is assigned a superimposition device (17) which is provided to superimpose the virtual representation generated by the graphical simulation module (9) with the live image provided by the camera (16) on the display device (3).

10. Simulator according to the preceding claim, wherein the camera (16) comprises a head holder for carrying the camera at the head of the user of the simulator and/or is formed as a head camera and/or helmet camera, wherein the camera (16) is formed as a stereoscopic camera for the provision of stereoscopic images at least approximately in the viewing direction of the user of the simulator, wherein the at least one display device (3) comprises a head holder to be carried on the head of the user of the simulator and/or is formed as display glasses, in particular in the form of virtual reality glasses with integrated camera (16).

11. Simulator according to claim 9 or 10, wherein the control station (2) includes an operator's cab wall, in which inspection windows are formed, wherein the mentioned inspection windows are colored in a certain color, wherein the graphical simulation module (9) and/or the superimposition device (17) comprises a color-sensitive fade-in unit for fading-in the virtual representation in the image surfaces of the live image provided by the camera (16), which are colored in the above-mentioned specific color.

12. Simulator according to the preamble of claim 1 or one of the preceding claims, wherein the graphical simulation module (9) comprises a data interface for importing data of the building and/or construction site, and an image processing device for generating and/or adjusting the virtual representation of the machine surroundings depending on the imported data of the building and/or construction site.

13. Simulator according to the preceding claim, wherein the mentioned data interface is a CAD interface and the image processing device is configured to generate and/or adjust the virtual representation of the machine surroundings depending on the CAD data imported through the CAD interface, and/or is an image data interface and the image processing device is configured to generate and/or adjust the virtual representation of the machine surroundings depending on the preferably digital image data imported via the image data interface.

14. Use of a simulator according to one of the preceding claims as a remote controller for the remote-control of a crane, a construction machine or an industrial truck.

15. System including a simulator (1), which is formed according to one of claims 1 to 13, as well as a crane, a construction machine or an industrial truck, wherein a communication link is provided between the crane, the construction machine and/or the industrial truck on the one hand, and the simulator (1) on the other hand, via which control commands entered at the control station (2) of the simulator (1) can be transmitted to the control device of the crane, the crane construction machine and/or the industrial truck.

## Revendications

1. Simulateur pour une grue, un engin de construction ou un chariot de manutention, avec un poste de commande (2), qui présente au moins un moyen de saisie (18) pour saisir des instructions de commande, un module de simulation graphique (9) pour calculer une représentation virtuelle de l'environnement d'engin et/ou de composants d'engin visibles depuis le poste de commande (2), ainsi qu'avec un dispositif d'affichage (3) pour afficher la représentation virtuelle calculée, dans lequel un module de simulation de déplacement (10) est prévu pour définir des déplacements et/ou déformations de composants d'engin, tels que la flèche de grue ou des crochets de charge, en fonction des instructions de commande saisies et le module de simulation graphique (9) est réalisé pour calculer la représentation virtuelle en fonction des déplacements et/ou déformations définies, **caractérisé en ce que** le module de simulation de déplacement (10) comprend un système d'émulation de données (19) pour l'émulation de données de déplacement de l'engin à simuler, dans lequel ledit système d'émulation de données (19) comprend au moins une unité d'entraînement (12) pour exécuter des déplacements d'entraînement de réglage en fonction d'instructions de commande saisies sur le poste de commande (2), au moins une autre unité d'entraînement (14) pour fournir un contre-couple et/ou une contre-charge, laquelle autre unité d'entraînement (14) peut être couplée à l'au moins une unité d'entraînement (12), ainsi qu'un système de détection (13) pour détecter les déplacements de l'unité d'entraînement (12) et fournir un signal de déplacement et/ou de position, dans lequel ledit signal de déplacement et/ou de position reproduit le déplacement de réglage obtenu réellement et est utilisé en tant que signal de capteur dans la simulation ultérieure, et le dispositif de simulation graphique est réalisé pour générer la représentation virtuelle en tenant compte du déplacement d'entraînement de réglage exécuté.

2. Simulateur selon la revendication précédente, dans lequel le module de simulation de déplacement (10) présente au moins un composant de commande de puissance, en particulier sous la forme d'un convertisseur de fréquence (15) pour piloter l'au moins une unité d'entraînement (12).

3. Simulateur selon la revendication précédente, dans lequel le module de simulation de déplacement (10) comprend l'armoire de distribution et/ou l'unité de commande, qui correspondent à l'armoire de distribution et/ou à l'unité de commande de l'engin à simuler ou sont conformées à celles-ci.

4. Simulateur selon le préambule de la revendication 1 ou selon l'une quelconque des revendications précédentes, dans lequel le poste de commande (2) est monté de manière mobile et un dispositif d'entraînement (8) est prévu pour déplacer le poste de commande (2) en fonction des déplacements et/ou déformations définis par le module de simulation de déplacement (10).

5. Simulateur selon la revendication précédente, dans lequel le poste de commande (2) est monté de manière mobile sur plusieurs axes et le dispositif d'entraînement (8) présente plusieurs axes de déplacement (x, y, z), de préférence comprenant plusieurs axes de déplacement par rotation et/ou plusieurs axes de déplacement par translation, qui peuvent être actionnés en fonction d'instructions de commande saisies sur le poste de commande (2).

6. Simulateur selon l'une quelconque des deux revendications précédentes, dans lequel le poste de commande (2) est monté sur une plate-forme de déplacement (7), dans laquelle le dispositif d'entraînement (8) est intégré.

7. Simulateur selon le préambule de la revendication 1 ou selon l'une quelconque des revendications précédentes, dans lequel le module de simulation de déplacement (10) présente un système de définition pour définir des déformations de composants structurels de l'engin à simuler en fonction d'instructions de commande saisies sur le poste de commande (2), dans lequel ledit système de définition présente une unité de calcul (11) pour calculer les déformations à l'aide d'un modèle de déformation mémorisé des composants structurels.

8. Simulateur selon la revendication précédente, dans lequel le module de simulation graphique (9) est réalisé pour générer la représentation virtuelle en fonction des déformations calculées des composants structurels et/ou un dispositif de commande est prévu pour piloter le dispositif d'entraînement (8) en fonction des déformations calculées des composants structurels.

9. Simulateur selon le préambule de la revendication 1 ou selon l'une quelconque des revendications précédentes, dans lequel au moins une caméra (16) pour détecter des images en direct est prévue sur le poste de commande (2) et est associé à l'au moins un dispositif d'affichage (3) un dispositif de superposition (17), qui est prévu pour superposer sur le dispositif d'affichage (3) la représentation virtuelle générée par le module de simulation graphique (9) avec l'image en direct fournie par la caméra (16).

10. Simulateur selon la revendication précédente, dans lequel la caméra (16) présente une fixation de tête pour porter la caméra sur la tête de l'utilisateur du simulateur et/ou est réalisée en tant que caméra portée sur la tête et/ou sur le casque, dans lequel la caméra (16) est réalisée en tant que caméra stéréoscopique pour fournir des images stéréoscopiques au moins approximativement dans la direction du regard de l'utilisateur du simulateur, dans lequel l'au moins un dispositif d'affichage (3) présente une fixation de tête destinée à être portée sur la tête de l'utilisateur de simulateur et/ou est réalisé en tant que lunettes d'affichage, en particulier sous la forme de lunettes de réalité virtuelle avec caméra intégrée (16).

11. Simulateur selon la revendication 9 ou 10, dans lequel le poste de commande (2) comprend une paroi de cabine, dans laquelle des fenêtres d'inspection sont réalisées, dans lequel lesdites fenêtres d'inspection sont colorées en une couleur définie, dans lequel le module de simulation graphique (9) et/ou le système de superposition (17) présentent une unité de masquage sensible aux couleurs pour masquer la représentation virtuelle sur les surfaces d'image de l'image en direct fournie par la caméra (16), qui sont colorées dans la couleur définie susmentionnée.

12. Simulateur selon le préambule de la revendication 1 ou selon l'une quelconque des revendications précédentes, dans lequel le module de simulation graphique (9) présente une interface de données pour insérer des données d'ouvrage de construction et/ou de site de construction et présente un système de traitement d'images pour générer et/ou adapter la représentation virtuelle de l'environnement de l'engin en fonction des données de site de construction et/ou d'ouvrage de construction insérées.

13. Simulateur selon la revendication précédente, dans lequel ladite interface de données est une interface CAD et le système de traitement d'images est réalisé pour générer et/ou adapter la représentation virtuelle de l'environnement de l'engin en fonction des données CAD insérées par l'intermédiaire de l'interface CAD, et/ou est une interface de données d'image et le système de traitement d'image est prévu pour générer et/ou adapter la représentation virtuelle de l'environnement de l'engin en fonction des données d'image de préférence numériques insérées par l'intermédiaire de l'interface de données d'image.

14. Utilisation d'un simulateur selon l'une quelconque des revendications précédentes en tant que système de commande à distance pour commander à distance une grue, un engin de construction ou un chariot de manutention.

15. Système comprenant un simulateur (1), qui est réalisé selon l'une quelconque des revendications 1 - 13, ainsi qu'une grue, un engin de construction ou un chariot de manutention, dans lequel est prévue entre la grue, l'engin de construction et/ou le chariot de manutention d'une part et le simulateur (1) d'autre part une liaison de communication, par l'intermédiaire de laquelle des instructions de commande saisies sur le poste de commande (2) du simulateur (1) peuvent être transférées au système de commande de la grue, de l'engin de construction et/ou du chariot de manutention.
